# EUROPÄISCHE PATENTSCHRIFT

(11) **EP 2 535 965 B1**
(45) Veröffentlichungstag und Bekanntmachung des Hinweises auf die Patenterteilung: **13.02.2019**
(21) Anmeldenummer: 12167618.3
(22) Anmeldetag: 11.05.2012
(51) Int. Cl.: H01M 2/20, H01M 2/30

(54) **VERBINDER FÜR ELEKTRISCHE ANSCHLÜSSE UND VERFAHREN ZUM VERBINDEN VON ELEKTRISCHEN BAUTEILEN**
CONNECTOR FOR ELECTRICAL CONNECTIONS AND METHOD FOR CONNECTING ELECTRICAL COMPONENTS
CONNECTEUR POUR RACCORDEMENTS ÉLECTRIQUES ET PROCÉDÉ DE CONNEXION DE COMPOSANTS ÉLECTRIQUES

(30) Priorität: 17.06.2011 DE 102011077691
(43) Veröffentlichungstag der Anmeldung: 19.12.2012
(73) Patentinhaber: ROBERT BOSCH GMBH, 70442 Stuttgart (DE)
(72) Erfinder: Kretschmar, Thomas, 96050 Bamberg (DE)

(56) Entgegenhaltungen:
- EP-A2- 0 707 321
- DE-A1- 4 301 623
- DE-A1-102006 015 566
- DE-A1-102009 047 490
- DE-A1-102009 053 344
- DE-U1- 29 915 396
- US-A- 2 322 388

## Beschreibung

Die Erfindung betrifft einen Verbinder und ein Verfahren zum Verbinden von elektrischen Anschlüssen, insbesondere von Polanschlüssen von Energiespeicherzellen in Hochleistungs-Akkumulatoren.

### Stand der Technik

Traktionsbatterien in Elektrofahrzeugen oder anderen elektrisch betriebenen Maschinen bestehen häufig aus einzelnen Batteriezellen, welche in Reihe geschaltet werden, um die nötige Leistung beziehungsweise Hochspannung bereitstellen zu können. Hierzu werden beispielsweise Lithium-Ionen-Akkumulatoren verwendet. Zur Ausbildung von Reihenschaltungen müssen die einzelnen Batteriezellen dabei mit ihren entsprechenden Polanschlüssen untereinander verbunden werden.

Die Druckschrift DE 38 03 321 C1 offenbart eine bandförmige Kupferlamelle mit Durchbrechungen in den Endbereichen, welche auf Polbolzen von Batteriezellen aufgesteckt werden können.

Hochleistungsakkumulatoren stellen hohe Stromstärken bereit, so dass bereits geringe Übergangswiderstände hohe Verlustleistungen hervorrufen können. Stoffschlüssige Verbindungen eignen sich daher prinzipiell zur Verringerung von hohen Übergangswiderständen. Bei der Anwendung von Schweißverfahren zur Herstellung stoffschlüssiger Verbindungen ist jedoch darauf zu achten, dass Kraft- und Wärmeeinträge in die zu verbindenden Batteriezellen gering gehalten werden, um sensible Komponenten der Batteriezellen, beispielsweise Kunststoffmembranen im Inneren der Zellen, nicht zu beschädigen.

Die Druckschrift DE 20 2009 012 647 U1 offenbart einen Batteriezellenverbinder mit Anschlussteilen, welche im Überlappstoß an Polanschlüsse von Batteriezellen geschweißt werden können.

Die Druckschrift US 2010/0173190 A1 offenbart ein Batteriemodul mit mehreren Batteriezellen, welche über metallische Verbindungselemente an den Elektrodenanschlüssen verbunden sind. Die Elektrodenanschlüsse ragen dabei durch isolierende Elemente abgesetzt aus den Batteriezellen heraus.

Die Druckschrift DE 10 2006 015 566 A1 offenbart einen Polverbinder zur elektrischen Verbindung zweier elektrischer Pole von Einzelzellen eines elektrochemischen Energiespeichers beschrieben, der ein Bündel von mindestens zwei, jeweils den Zwischenraum zwischen miteinander zu verbindenden Polen überbrückenden Leiterelementen umfasst. Darüber hinaus wird ein elektrochemischer Energiespeicher, umfassend mehrere miteinander elektrisch verbundene Einzelzellen, beschrieben, dessen Einzelzellen mittels oben genannter miteinander verbunden sind.

### Offenbarung der Erfindung

Erfindungsgemäß schafft die Erfindung einen Energiespeicher mit:
einer Vielzahl von Energiespeicherzellen mit jeweils zwei nach außen ragenden Polanschlüssen; undeiner Vielzahl von Verbindern, wobei der Verbinder ein Flachband aus einem elektrisch leitfähigen Material aufweist, das Flachband umfassend: zwei zu einem festen Vollmaterial verdichtete Verbindungsendstücke, welche in Randbereichen des Flachbands angeordnet sind, und in welchen jeweils ein Durchgangsloch mit einer Innenwand in dem Flachband angeordnet ist; und einen Mittelbereich, welcher zwischen den zwei Verbindungsendstücken angeordnet ist, und welcher eine Mehrzahl von flexibel zueinander beweglichen Materialelementen aufweist, und jeweils ein konischer Polanschluss zweier Energiespeicherzellen in den Durchgangslöchern formschlüssig aufgenommen ist, und mit den Polanschlüssen in einem Fügestoß zwischen der Innenwand des Durchgangslochs und der Außenseite des Polanschlusses verschweißt sind, wobei die Durchgangslöcher eine konische Form aufweisen und dass die jeweils zwei Polanschlüsse konisch nach außen ragen.

Gemäß einer weiteren Ausführungsform schafft die Erfindung ein Verfahren zum Verbinden von elektrischen Anschlüssen, mit den Schritten des Aufsteckens eines erfindungsgemäßen Verbinders mit jeweils einem Durchgangsloch auf jeweils einen konischen elektrischen Anschluss zweier elektrischer Bauteile, so dass die elektrischen Anschlüsse in den Durchgangslöchern formschlüssig aufgenommen werden, und des Ausbildens jeweils einer Stumpfschweißnaht in den Fügestößen zwischen den Innenwänden der konischen Durchgangslöcher und den Außenseiten der elektrischen Anschlüsse durch Laserschweißen, so dass die Verbinder mit den elektrischen Anschlüssen jeweils stoffschlüssig verbunden werden.

### Vorteile der Erfindung

Eine grundlegende Idee der Erfindung ist es, eine flexible elektrische Verbindung zwischen elektrischen Anschlüssen elektrischer Bauteile, insbesondere zwischen Polanschlüssen zweier Energiespeicherzellen zu schaffen. Dazu ist ein Verbindungselement aus einem elektrisch leitfähigen Material vorgesehen, welches ein in einem Mittelbereich flexibles (Flach-)Band ausbildet und über konische Durchgangslöcher mit konischen Anschlüssen der Bauteile durch Aufstecken verbunden werden kann. Durch die formschlüssige Steckverbindung kann dann eine stabile Stumpfschweißnaht ausgebildet werden, beispielsweise eine I-Naht durch Laserschweißen. Das Flachband kann zwei Verbindungsendstücke umfassen, welche beispielsweise mittels Ultraschall- oder Widerstandsschweißen kompaktiert sind, und in welchen jeweils ein leicht konisches Durchgangsloch angeordnet ist. In dem Fügestoß zwischen der Innenwand des konischen Durchgangslochs und der Außenwand bzw. Außenseite des elektrischen Anschlusses kann dann die Schweißnaht ausgebildet werden.

Die Stumpfschweißnaht ist dabei vorteilhafterweise geeignet, eine unlösbare und stoffschlüssige Verbindung zwischen den elektrischen Anschlüssen und dem Verbindungselement zu schaffen. Dadurch wird ein niedriger Übergangswiderstand zwischen elektrischem Anschluss und Verbindungselement gewährleistet. Dies ist bei Energiespeicherzellen sowie anderen Bauteilen mit minimierten Übergangswiderständen, wie beispielsweise Motoren, von Vorteil.

In einer bevorzugten Ausführungsform können die elektrischen Bauteile Energiespeicherzellen mit Polanschlüssen aus Aluminium sein und das Verbindungselement bzw. der Verbinder aus Kupfer bestehen. Da insbesondere das Aluminium im Bereich der Schweißnaht innerhalb des Kupferwerkstoffs angeordnet wird, können durch Wärmeausdehnung des Aluminiums verursachte Spannungen erheblich reduziert werden, wodurch die Spannungsfestigkeit der Schweißnaht steigt. Außerdem können dadurch spröde intermetallische Phasen, welche sich in der Schweißnaht bilden können, in höherem Maße toleriert werden.

Vorteilhafterweise können die Schweißnähte durch Laserschweißverfahren ausgebildet werden, so dass der Wärmeeintrag in die elektrischen Anschlüsse minimiert wird. Dies ist insbesondere vorteilhaft, da beispielsweise Kunststoffbauteile in Energiespeicherzellen durch den Schweißvorgang nicht beschädigt werden. Dies kommt umso mehr zum Tragen, als dass mit dem Laserschweißverfahren keinerlei Krafteintrag in die Energiespeicherzellen erfolgt, wodurch Energiespeicherzellen mechanisch schonend verbunden werden können.

Durch den flexiblen Mittelbereich des Verbindungselements kann ein Schwellen verbundener Energiespeicherzellen, beispielsweise in Lade-/Entladezyklen, ausgeglichen werden, ohne dass es zu mechanischen Belastungen der Schweißverbindungen kommt. Besonders vorteilhaft können hierbei Verbindungselemente sein, welche Flachbänder aus geschichteten Kupferfolien aufweisen, welche im Mittelbereich die nötige Flexibilität bereitstellen können, und welche zur Ausbildung stabiler Polverbindungsbereiche in den Endbereichen beispielsweise mittels Ultraschall- oder Widerstandsschweißen kompaktiert sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Verbinders gemäß einer Ausführungsform der Erfindung;
- Fig. 2: eine schematische Darstellung eines Verbinders gemäß einer weiteren Ausführungsform der Erfindung;
- Fig. 3a: eine schematische Darstellung eines Akkumulators mit durch Verbinder verbundenen Energiespeicherzellen in Draufsicht gemäß einer weiteren Ausführungsform der Erfindung;
- Fig. 3b: eine schematische Darstellung des in Fig. 3a dargestellten Akkumulators mit durch Verbinder verbundenen Energiespeicherzellen in Seitenansicht gemäß einer weiteren Ausführungsform der Erfindung;
- Fig. 3c: eine schematische Darstellung des in Fig. 3a dargestellten Akkumulators mit durch Verbinder verbundenen Energiespeicherzellen in perspektivischer Detailansicht gemäß einer weiteren Ausführungsform der Erfindung; und
- Fig. 4: eine schematische Darstellung eines Verfahrens zum Verbinden von Energiespeicherzellen eines Akkumulators gemäß einer weiteren Ausführungsform der Erfindung.

### Ausführliche Beschreibung der Erfindung

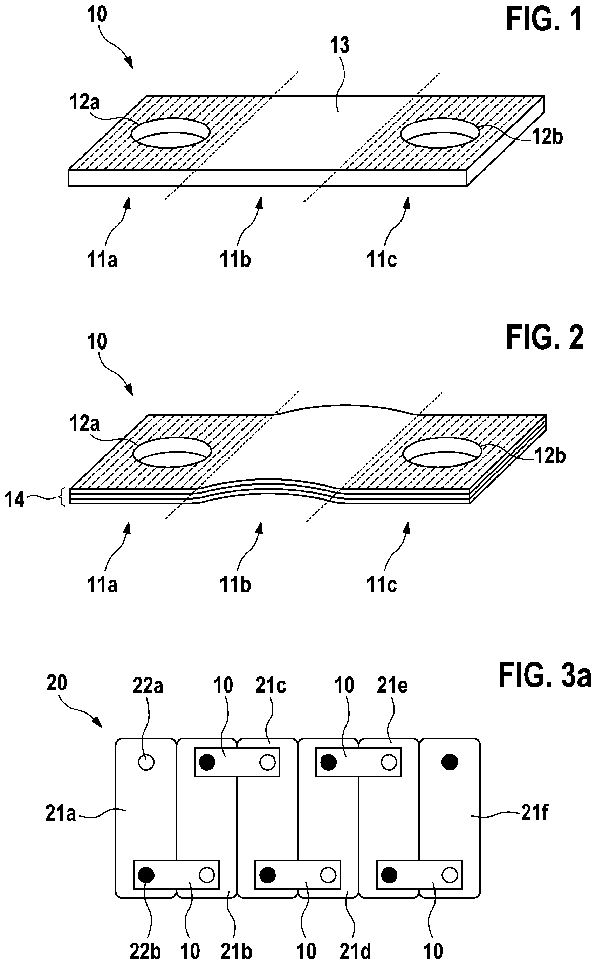

Fig. 1 zeigt eine schematische Darstellung eines Verbinders 10. Der Verbinder 10 umfasst ein Flachband 13, welches aus einem elektrisch leitfähigen Material gefertigt ist. Das Flachband 13 umfasst dabei eine Mehrzahl von flexibel zueinander beweglichen Materialelementen. Beispielsweise kann das Flachband 13 aus geflochtenen Kupferdrähten oder Nickeldrähten bestehen. Das Flachband 13 kann beispielsweise durch Zuschneiden eines längeren Bandes in Flachbandabschnitte zur Bereitstellung des Verbinders hergestellt werden. Das Flachband 13 kann beispielsweise eine rechteckige Grundform aufweisen, wobei das Flachband 13 entlang einer Längsrichtung in drei Bereiche 11a, 11b und 11c eingeteilt ist. Ein in Längsrichtung mittlerer Bereich 11b kann ein flexibler Bereich sein, das heißt, dass der Bereich 11b gegenüber Verwindungen, Torsionen und Biegungen des Bandes elastisch oder semi-elastisch ausgebildet ist. Der Länge des Mittelbereichs 11b kann dabei von der Länge des Flachbandes 13 abhängig sein und es versteht sich, dass die in Fig. 1 angegebenen Dimensionen für das Flachband 13 nur beispielhafter Natur sind.

Das Flachband 13 weist in entlang der Längsrichtung des Flachbandes 13 gelegenen Endbereichen Verbindungsendstücke 11a und 11c auf, welche insbesondere gleich aufgebaut sein können. Die Verbindungsendstücke 11a und 11c können beispielsweise mittels Ultraschall- oder Widerstandsschweißen kompaktiert sein, das heißt zu einem festen Vollmaterial verdichtet sein. Die Verdichtung der Verbindungsendstücke 11a und 11c ist in Fig. 1 durch gestrichelte Linien angedeutet. Die Verbindungsendstücke 11a und 11c weisen dabei Durchgangslöcher 12a und 12b zylindrischer oder konischer Form auf, welche eine Durchgangsverbindung von einer Hauptoberfläche des Flachbandes 13 zu einer gegenüber gelegenen Hauptoberfläche schaffen. Die Durchgangslöcher 12a und 12b können dabei einen Durchmesser aufweisen, welcher an mit dem Verbinder 10 zu verbindende, zylindrische oder konische elektrische Anschlüsse angepasst ist. Insbesondere sind die Durchgangslöcher 12a und 12b derart ausgebildet, dass die zylindrischen bzw. konischen elektrischen Anschlüsse elektrischer Bauteile formschlüssig mit der Innenwand der Durchgangslöcher 12a und 12b aufgenommen werden können. Die Durchgangslöcher 12a und 12b können beispielsweise durch Stanzen oder Bohren in das Flachband 13 eingebracht werden. Konische Durchgangslöcher 12a und 12b können dabei den Vorteil aufweisen, dass Fertigungstoleranzen besser ausgeglichen werden können. Im Folgenden wird jeweils beispielhaft auf zylindrische Durchgangslöcher Bezug genommen, wobei es jedoch klar ist, dass die jeweiligen Durchgangslöcher auch konische Innenform haben können.

Fig. 2 zeigt eine schematische Darstellung eines Verbinders 10. Der Verbinder 10 in Fig. 2 unterscheidet sich von dem Verbinder 10 in Fig. 1 im Wesentlichen dadurch, dass das Flachband 13 aus einer Vielzahl geschichteter Folien 14 aus einem elektrisch leitfähigen Material, beispielsweise Kupferfolien 14 aufgebaut ist. Das Flachband 13 umfasst ein Folienstromband mit einer Vielzahl von geschichteten Folien 14. Die Folien 14 können dabei in den Verbindungsendstücken 11a und 11c zusammengepresst bzw. verdichtet sein, so dass die Verbindungsendstücke 11a und 11c einen stabilen, nicht flexiblen Bandbereich bilden. In dem Mittelbereich 11b können die Vielzahl von Folien 14 lose aufeinander geschichtet sein, so dass der Mittelbereich 11b gegenüber Biegungen, Torsionen und/oder Verwindungen flexibel ist.

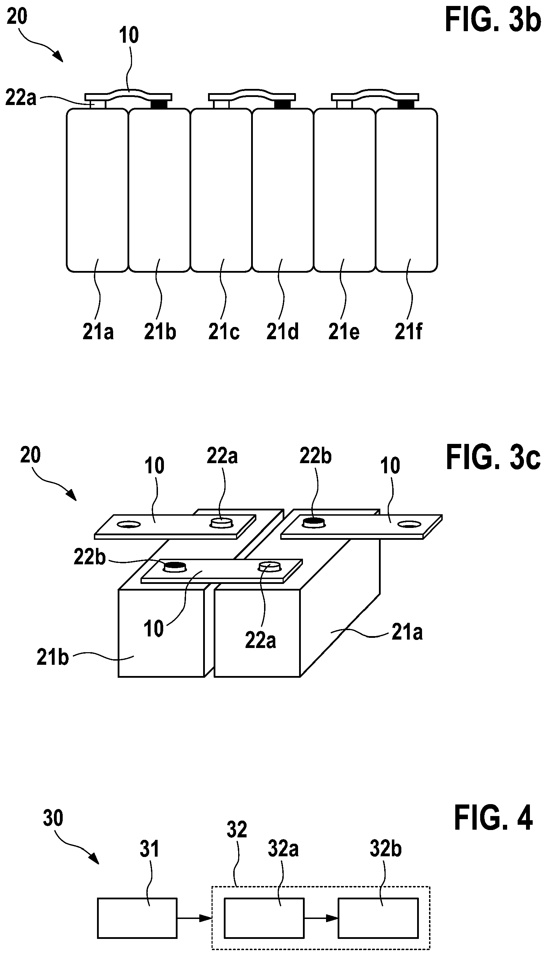

In den Figuren 3a, 3b und 3c ist ein Energiespeicher 20 mit einer Vielzahl von Energiespeicherzellen 21a, 21b, 21c, 21d, 21e und 21f gezeigt, welche über eine Vielzahl von Verbindern 10, beispielsweise Verbinder 10 gemäß der Fig. 1 und 2 verbunden sind. Fig. 3a zeigt dabei eine Draufsicht auf einen Energiespeicher 20. Die Energiespeicherzellen 21a, ..., 21f können beispielsweise Lithium-Ionen-Akkumulatoren, Lithium-Feststoff-Akkumulatoren oder ähnliche Energiespeicherzellen sein, welche in Reihenschaltung zu dem Energiespeicher 20 zusammengeschlossen sind. Der Energiespeicher 20 kann somit beispielsweise eine Hochspannungs-Traktionsbatterie, insbesondere für ein Elektrofahrzeug darstellen. Die Anzahl der Energiespeicherzellen 21a, ..., 21f ist dabei nicht auf sechs begrenzt - es versteht sich, dass die Anzahl der Energiespeicherzellen 21a, ..., 21f in den Fig. 3a, 3b und 3c nur beispielhafter Natur ist, und dass prinzipiell jede andere Anzahl an Energiespeicherzellen ebenso möglich ist.

Jede der Energiespeicherzellen 21a, ..., 21f weist dabei zwei Polanschlüsse 22a, 22b auf, an welchen eine von der jeweiligen Energiespeicherzelle 21a, ..., 21f bereitgestellte Versorgungsspannung abgegriffen werden kann. Die Polanschlüsse 22a, 22b können beispielsweise Elektrodenanschlüsse sein und einen Pluspol und einen Minuspol der Energiespeicherzellen 21a, ..., 21f aufweisen. Die Polanschlüsse 22a, 22b können dabei aus elektrisch leitfähigen Materialien gefertigt sein. Im Falle von Lithium-Ionen-Akkumulatoren kann ein Polanschluss 22a beispielsweise aus Kupfer und der andere Polanschluss 22b beispielsweise aus Aluminium hergestellt sein.

Die Polanschlüsse 22a, 22b zweier benachbarter Energiespeicherzellen 21a, ...,21f können dabei über einen Verbinder 10 verbunden sein. Beispielsweise kann ein Verbinder 10 den Minuspol einer Energiespeicherzelle mit dem Pluspol einer benachbarten Energiespeicherzelle elektrisch verbinden, so dass eine Reihenschaltung der benachbarten Energiespeicherzellen geschaffen wird. Der Verbinder 10 wird dabei mit den Durchgangslöchern 12a, 12b über die zylindrischen Polanschlüsse 22a, 22b der Energiespeicherzellen 21a, ... 21f, gesteckt, so dass eine formschlüssige Verbindung zwischen der Innenwand der Durchgangslöcher 12a, 12b und der Außenwand der Polanschlüsse 22a, 22b entsteht, das heißt, die Innenwand der Durchgangslöcher 12a, 12b ist in ihrer Form der Form der Außenseite der Polanschlüsse 22a, 22b angepasst, so dass eine mechanische Sperrverbindung der zwei koaxial zueinander ausgebildeten Zylinderformen gegenüber in Normalenrichtung der Zylinderseitenwände wirkenden Zugkräften entsteht.

Die formschlüssige Verbindung bildet dabei einen Fügestoßbereich aus, in welchem mithilfe eines Schweißverfahrens eine Schweißnaht zum unlösbaren Verbinden des Verbinders 10 und der Polanschlüsse 22a, 22b eingebracht werden kann. Die Schweißnaht umfasst dabei einen Bereich einer stoffschlüssigen Verbindung zwischen den Materialien, aus denen der Verbinder 10 bzw. die Polanschlüsse 22a, 22b gefertigt sind. Beispielsweise kann der Verbinder 10 aus Kupfer und einer der Polanschlüsse 22a, 22b aus Aluminium hergestellt sein, so dass bei einem Schmelzschweißen entlang des Umfangs des Fügestoßbereichs eine kreisförmige Schweißnaht mit einer stoffschlüssigen Verbindung aus Aluminium und Kupfer entsteht, das heißt, dass sich der Aluminiumwerkstoff mit dem Kupferwerkstoff im Bereich der Schweißnaht vermischt. Dabei kann es vorkommen, dass sich intermetallische Phasen ausbilden, die insbesondere bei Aluminium-Kupfer-Verbindungen spröde sein können.

Fig. 3b zeigt den Energiespeicher 20 aus Fig. 3a in Seitenansicht und Fig. 3c zeigt den Energiespeicher 20 aus Fig. 3a in perspektivischer Detailansicht. Dabei sind Verbinder 10 gezeigt, welche in dem Mittelbereich flexibel ausgestaltet sind und eine Länge aufweisen, die geringfügig länger sein kann als die Distanz zwischen zwei benachbarten Polanschlüssen 22a, 22b, welche durch den Verbinder 10 elektrisch verbunden sind. Dadurch können Ausdehnungen der Energiespeicherzellen 21a, ..., 21f durch beispielsweise Wärmeentwicklung in Lade-/Entladezyklen ausgeglichen werden, ohne dass die Schweißnähte stark belastet werden.

Fig. 4 zeigt eine schematische Darstellung eines Verfahrens 30 zum elektrischen Verbinden elektrischer Anschlüsse elektrischer Bauteile. In einem ersten Schritt 31 erfolgt ein Aufstecken eines Verbinders 10, beispielsweise eines Verbinders 10 der Fig. 1 oder 2 mit jeweils einem Durchgangsloch 12a, 12b auf jeweils einen zylindrischen elektrischen Anschluss 22a, 22b zweier elektrischer Bauteile 21a, 21b, so dass die elektrischen Anschlüsse 22a, 22b in den Durchgangslöchern 12a, 12b formschlüssig aufgenommen werden. Dabei können die zwei elektrischen Bauteile 21a, 21b benachbarte Energiespeicherzellen 21a, 21b eines Energiespeichers 20 wie in Fig. 3 gezeigt sein. Mit dem Verfahren 30 können jedoch auch andere elektrische Bauteile mit zylindrischen elektrischen Anschlüssen, wie beispielsweise Motoren, verbunden werden.

In einem zweiten Schritt 32 erfolgt ein Ausbilden jeweils einer Stumpfschweißnaht in den Fügestößen zwischen den Innenwänden der zylindrischen Durchgangslöcher 12a, 12b und den Außenwänden bzw. Außenseiten der elektrischen Anschlüsse 22a, 22b. Dies kann durch Laserschweißen erfolgen, so dass die Verbinder 10 mit den elektrischen Anschlüssen 22a, 22b jeweils stoffschlüssig verbunden werden. Dazu kann in einem Unterschritt 32a ein Laserstrahls mit einer Strahlintensität unterhalb eines Schweißschwellwerts entlang des Fügestoßumfangs geführt werden. Beispielsweise kann ein Laserstrahl einer Laserschweißanlage mit niedriger Intensität auf den Fügestoßumfang justiert werden und mit einer Strahlgeschwindigkeit zwischen 2 m/min und 30 m/min, insbesondere etwa 5 m/min, entlang der Oberfläche des Verbinders 10 im Bereich des zu schweißenden Fügestoßumfangs geführt werden. Dadurch bewegt sich der Laserstrahl mit hoher Geschwindigkeit stets gleichmäßig über der Schweißnaht. Dies hat den Vorteil, dass aufgrund der Kreissymmetrie der Schweißnaht jederzeit mit dem Schweißen begonnen werden kann, ohne dass ein bestimmter Anfangszeitpunkt für den Beginn des eigentlichen Schweißvorgangs eingehalten werden muss. Wenn die Justage des Laserstrahls durchgeführt worden ist, kann in einem Schritt 32b die Strahlintensität des Laserstrahls über den Schweißschwellwert erhöht werden. Dabei wird die laterale Strahlgeschwindigkeit des Laserstrahls beibehalten, so dass ein gleichmäßiges Schweißen der Schweißnaht über den gesamten Fügestoßumfang gewährleistet werden kann. Die Strahlintensität kann für eine vorbestimmte Schweißdauer, während der Laserstrahl entlang des Fügestoßumfangs bewegt wird, über dem Schweißschwellwert gehalten werden. Die Schweißdauer kann dabei insbesondere an dem maximal zulässigen Wärmeeintrag in die Schweißnaht richten, so dass thermische Beschädigungen von Kunststoffkomponenten des elektrischen Bauteils, beispielsweise Kunststoffmembranen im Inneren von Energiespeicherzellen minimiert oder sogar ausgeschlossen werden können.

Zum Laserschweißen können beispielsweise Festkörperlaser mit einer Wellenlänge von etwa 1 µm und einer Leistungsdichte von größer als 25 MW/cm² eingesetzt werden. Dadurch kann in dem Fügestoßbereich eine Stumpfstoßnaht, beispielsweise eine I-Naht, ausgebildet werden, die einen niedrigen Übergangswiderstand zwischen dem Verbinder 10 und den elektrischen Anschlüssen 22a, 22b schafft.

## Patentansprüche

1. Energiespeicher (20), mit:
einer Vielzahl von Energiespeicherzellen (21a, ..., 21f) mit jeweils zwei nach außen ragenden Polanschlüssen (22a, 22b); und
einer Vielzahl von Verbindern (10), wobei der Verbinder (10) ein Flachband (13) aus einem elektrisch leitfähigen Material aufweist, das Flachband (13) umfassend: zwei zu einem festen Vollmaterial verdichtete Verbindungsendstücke (11a, 11c), welche in Randbereichen des Flachbands (13) angeordnet sind, und in welchen jeweils ein Durchgangsloch (12a, 12b) mit einer Innenwand angeordnet ist; und einen Mittelbereich (11b), welcher zwischen den zwei Verbindungsendstücken (11a, 11c) angeordnet ist, und welcher eine Mehrzahl von flexibel zueinander beweglichen Materialelementen aufweist, **dadurch gekennzeichnet, dass**
jeweils ein konischer Polanschluss (22a, 22b) zweier Energiespeicherzellen (21a, ..., 21f) in den Durchgangslöchern (12a, 12b) formschlüssig aufgenommen ist, und mit den Polanschlüssen (22a, 22b) in einem Fügestoß zwischen der Innenwand des Durchgangslochs (12a, 12b) und der Außenseite des Polanschlusses (22a, 22b) verschweißt sind, wobei die Durchgangslöcher (12a, 12b) eine konische Form aufweisen und dass die jeweils zwei Polanschlüsse (22a, 22b) konisch nach außen ragen.

2. Energiespeicher (20) nach Anspruch 1, wobei die Verbindungsendstücke (11a, 11c) jeweils dazu ausgelegt sind, einen elektrischen Anschluss einer Energiespeicherzelle in dem Durchgangsloch (12a, 12b) aufzunehmen, und mit den elektrischen Anschlüssen in dem Fügestoß zwischen der Innenwand des Durchgangslochs (12a, 12b) und einer Außenseite des elektrischen Anschlusses verschweißt zu werden.

3. Energiespeicher (20) nach einem der Ansprüche 1 und 2, wobei das Flachband (13) ein Folienstromband mit einer Vielzahl von geschichteten Folien (14) umfasst.

4. Energiespeicher (20) nach einem der Ansprüche 1 und 2, wobei das Flachband (13) eine Vielzahl von geflochtenen Drähten umfasst.

5. Energiespeicher (20) nach einem der Ansprüche 1 bis 4, wobei das elektrisch leitfähige Material Kupfer oder Nickel umfasst, und wobei die Energiespeicherzellen Energiespeicherzellen (21a, ..., 21f) mit elektrischen Anschlüssen (22a, 22b) aus Kupfer oder Aluminium sind.

6. Energiespeicher (20) nach einem der vorhergehenden Ansprüche, wobei die Polanschlüsse (22a, 22b) aus Aluminium oder Kupfer bestehen.

7. Energiespeicher (20) nach einem der vorhergehenden Ansprüche, wobei in dem Fügestoß eine Stumpfschweißnaht ausgebildet ist, so dass zwischen den Polanschlüssen (22a, 22b) und den Flachbändern (13) jeweils eine stoffschlüssige Schweißverbindung besteht.

8. Verfahren (30) zum elektrischen Verbinden von Energiespeicherzellen mit den Schritten:
Aufstecken (31) eines Verbinders (10), wobei der Verbinder (10) ein Flachband (13) aus einem elektrisch leitfähigen Material aufweist, das Flachband (13) umfassend: zwei zu einem festen Vollmaterial verdichtete Verbindungsendstücke (11a, 11c), welche in Randbereichen des Flachbands (13) angeordnet sind, und in welchen jeweils ein eine konische Form aufweisendes Durchgangsloch (12a, 12b) mit einer Innenwand angeordnet ist; und einen Mittelbereich (11b), welcher zwischen den zwei Verbindungsendstücken (11a, 11c) angeordnet ist, und welcher eine Mehrzahl von flexibel zueinander beweglichen Materialelementen aufweist,
mit jeweils einem Durchgangsloch (12a, 12b) auf jeweils einen konischen, nach außen ragenden elektrischen Anschluss (22a, 22b) zweier Energiespeicherzellen (21a, 21b), so dass die elektrischen Anschlüsse (22a, 22b) in den Durchgangslöchern (12a, 12b) formschlüssig aufgenommen werden;
Ausbilden (32) jeweils einer Stumpfschweißnaht in den Fügestößen zwischen den Innenwänden der Durchgangslöcher (12a, 12b) und den Außenseiten der elektrischen Anschlüsse (22a, 22b) durch Laserschweißen, so dass die Verbinder (10) mit den elektrischen Anschlüssen (22a, 22b) jeweils stoffschlüssig verbunden werden.

9. Verfahren (30) nach Anspruch 8, wobei das Ausbilden der Stumpfschweißnähte jeweils umfasst:
Führen (32a) eines Laserstrahls mit einer Strahlintensität unterhalb eines Schweißschwellwerts entlang des Fügestoßumfangs; und
Erhöhen (32b) der Strahlintensität über den Schweißschwellwert für eine vorbestimmte Schweißdauer, während der Laserstrahl entlang des Fügestoßumfangs bewegt wird.

10. Verfahren (30) nach einem der Ansprüche 8 und 9, wobei die elektrischen Anschlüsse Polanschlüsse (22a, 22b) der Energiespeicherzellen (21a, ..., 21f) aus Kupfer oder Aluminium sind.

## Claims

1. Energy store (20), comprising:
a multiplicity of energy storage cells (21a, ..., 21f) each having two outwardly projecting pole connections (22a, 22b); and
a multiplicity of connectors (10), wherein the connector (10) comprises a flat strip (13) composed of an electrically conductive material, the flat strip (13) comprising: two connecting end pieces (11a, 11c), which are compacted to form a strong solid material and which are arranged in edge regions of the flat strip (13) and in which a respective through hole (12a, 12b) having an inner wall is arranged; and a central region (11b), which is arranged between the two connecting end pieces (11a, 11c) and which comprises a plurality of material elements that are movable flexibly with respect to one another, **characterized in that** a respective conical pole connection (22a, 22b) of two energy storage cells (21a, ..., 21f) is accommodated in a positively locking manner in the through holes (12a, 12b), and are welded to the pole connections (22a, 22b) in a joining abutment between the inner wall of the through hole (12a, 12b) and the outer side of the pole connection (22a, 22b), wherein the through holes (12a, 12b) have a conical shape, and **in that** the respective two pole connections (22a, 22b) project conically outwards.

2. Energy store (20) according to Claim 1, wherein the connecting end pieces (11a, 11c) are designed in each case to accommodate an electrical connection of an energy storage cell in the through hole (12a, 12b), and to be welded to the electrical connections in the joining abutment between the inner wall of the through hole (12a, 12b) and an outer side of the electrical connection.

3. Energy store (20) according to either of Claims 1 and 2, wherein the flat strip (13) comprises a film conductor strip having a multiplicity of stacked films (14).

4. Energy store (20) according to either of Claims 1 and 2, wherein the flat strip (13) comprises a multiplicity of braided wires.

5. Energy store (20) according to any of Claims 1 to 4, wherein the electrically conductive material comprises copper or nickel, and wherein the energy storage cells are energy storage cells (21a, ..., 21f) having electrical connections (22a, 22b) composed of copper or aluminium.

6. Energy store (20) according to any of the preceding claims, wherein the pole connections (22a, 22b) consist of aluminium or copper.

7. Energy store (20) according to any of the preceding claims, wherein a butt welding seam is formed in the joining abutment, such that there is a respective cohesive welding connection between the pole connections (22a, 22b) and the flat strips (13).

8. Method (30) for electrically connecting energy storage cells, comprising the following steps:
attaching (31) a connector (10), wherein the connector (10) comprises a flat strip (13) composed of an electrically conductive material, the flat strip (13) comprising: two connecting end pieces (11a, 11c), which are compacted to form a strong solid material and which are arranged in edge regions of the flat strip (13), and in which a respective conically-shaped through hole (12a, 12b) having an inner wall is arranged; and a central region (11b), which is arranged between the two connecting end pieces (11a, 11c) and which comprises a plurality of material elements that are movable flexibly with respect to one another, with a respective through hole (12a, 12b) onto a respective conical, outwardly projecting electrical connection (22a, 22b) of two energy storage cells (21a, 21b), such that the electrical connections (22a, 22b) are accommodated in a positively locking manner in the through holes (12a, 12b);
forming (32) a respective butt welding seam in the joining abutments between the inner walls of the through holes (12a, 12b) and the outer sides of the electrical connections (22a, 22b) by laser welding, such that the connectors (10) are in each case cohesively connected to the electrical connections (22a, 22b).

9. Method (30) according to Claim 8, wherein forming the butt welding seams comprises in each case:
guiding (32a) a laser beam having a beam intensity below a welding threshold value along the joining abutment circumference; and
increasing (32b) the beam intensity above the welding threshold value for a predetermined welding duration while the laser beam is moved along the joining abutment circumference.

10. Method (30) according to either of Claims 8 and 9, wherein the electrical connections are pole connections (22a, 22b) of the energy storage cells (21a, ..., 21f) composed of copper or aluminium.

## Revendications

1. Accumulateur d'énergie (20), avec:
une multiplicité de cellules d'accumulateur d'énergie (21a, ..., 21f) munies respectivement de bornes polaires saillantes vers l'extérieur (22a, 22b); et
une multiplicité de connecteurs (10), dans lequel le connecteur (10) présente une bande plate (13) en un matériau électriquement conducteur, la bande plate (13) comprenant:
deux pièces d'extrémité de connecteur (11a, 11c) comprimées en un matériau plein solide, qui sont disposées dans des régions de bord de la bande plate (13), et dans lesquelles est respectivement disposé un trou de passage (12a, 12b) avec une paroi intérieure; et une région centrale (11b), qui est disposée entre les deux pièces d'extrémité de connecteur (11a, 11c), et qui présente une multiplicité d'éléments matériels mobiles l'un par rapport à l'autre en flexion,
**caractérisé en ce qu'**une borne polaire conique (22a, 22b) de deux cellules d'accumulateur d'énergie (21a, ..., 21f) est respectivement logée par emboîtement dans les trous de passage (12a, 12b), et est soudée aux bornes polaires (22a, 22b) en un joint d'assemblage entre la paroi intérieure du trou de passage (12a, 12b) et le côté extérieur de la borne polaire (22a, 22b), dans lequel les trous de passage (12a, 12b) présentent une forme conique et **en ce que** chaque fois les deux bornes polaires (22a, 22b) sont saillantes vers l'extérieur sous forme conique.

2. Accumulateur d'énergie (20) selon la revendication 1, dans lequel les pièces d'extrémité de connecteur (11a, 11c) sont respectivement conçues pour accueillir une borne électrique d'une cellule d'accumulateur d'énergie dans le trou de passage (12a, 12b), et pour être soudées avec les bornes électriques dans le joint d'assemblage entre la paroi intérieure du trou de passage (12a, 12b) et un côté extérieur de la borne électrique.

3. Accumulateur d'énergie (20) selon une des revendications 1 et 2, dans lequel la bande plate (13) comprend une bande de courant feuilletée avec une multiplicité de feuilles stratifiées (14).

4. Accumulateur d'énergie (20) selon une des revendications 1 et 2, dans laquelle la bande plate (13) comprend une multiplicité de fils tressés.

5. Accumulateur d'énergie (20) selon l'une quelconque des revendications 1 à 4, dans lequel le matériau électriquement conducteur comprend du cuivre ou du nickel, et dans lequel les cellules d'accumulateur d'énergie sont des cellules d'accumulateur d'énergie (21a, ..., 21f) avec des bornes électriques (22a, 22b) en cuivre ou en aluminium.

6. Accumulateur d'énergie (20) selon l'une quelconque des revendications précédentes, dans lequel les bornes polaires (22a, 22b) sont constituées d'aluminium ou de cuivre.

7. Accumulateur d'énergie (20) selon l'une quelconque des revendications précédentes, dans lequel une soudure en bout est réalisée dans le joint d'assemblage, de telle manière qu'il existe chaque fois une liaison matérielle soudée entre les bornes polaires (22a, 22b) et les bandes plates (13).

8. Procédé (30) de connexion électrique de cellules d'accumulateur d'énergie, comprenant les étapes suivantes:
brancher (31) un connecteur (10), dans lequel le connecteur (10) présente une bande plate (13) en un matériau électriquement conducteur, la bande plate (13) comprenant:
deux pièces d'extrémité de connecteur (11a, 11c) comprimées en un matériau plein solide, qui sont disposées dans des régions de bord de la bande plate (13), et dans lesquelles est respectivement disposé un trou de passage (12a, 12b) présentant une forme conique avec une paroi intérieure; et une région centrale (11b), qui est disposée entre les deux pièces d'extrémité de connecteur (11a, 11c), et qui présente une multiplicité d'éléments matériels mobiles l'un par rapport à l'autre en flexion,
avec chaque fois un trou de passage (12a, 12b) respectivement sur une borne électrique conique (22a, 22b), saillante vers l'extérieur, de deux cellules d'accumulateur d'énergie (21a, 21b), de telle manière que les bornes électriques (22a, 22b) soient logées par emboîtement dans les trous de passage (12a, 12b);
former (32) respectivement une soudure en bout dans les joints d'assemblage entre les parois intérieures des trous de passage (12a, 12b) et les côtés extérieurs des bornes électrique (22a, 22b) par soudage au laser, de telle manière que les connecteurs (10) soient chaque fois reliés matériellement aux bornes électriques (22a, 22b).

9. Procédé (30) selon la revendication 8, dans lequel la formation des soudures en bout comprend chaque fois:
le guidage (32a) d'un faisceau laser avec une intensité de faisceau inférieure à une valeur de seuil de soudage le long de la périphérie du joint d'assemblage; et
augmenter (32b) l'intensité de faisceau au-delà de la valeur de seuil de soudage pendant une durée de soudage prédéterminée, pendant que l'on déplace le faisceau laser le long de la périphérie du joint d'assemblage.

10. Procédé (30) selon une des revendications 8 et 9, dans lequel les bornes électriques sont des bornes polaires (22a, 22b) des cellules d'accumulateur d'énergie (21a, ..., 21f) en cuivre ou en aluminium.
